# EUROPEAN PATENT SPECIFICATION

(11) **EP 3 602 846 B1**
(45) Date of publication and mention of the grant of the patent: **05.08.2020**
(21) Application number: 18740945.3
(22) Date of filing: 15.06.2018
(51) Int. Cl.: H04B 11/00

(54) **BINARY PHASE SHIFT KEYING SOUND MODULATION**
BINÄRE PHASENUMTASTUNGSSCHALLMODULATION
MODULATION DE SON DE MODULATION PAR CHANGEMENT DE PHASE BINAIRE

(30) Priority: 24.08.2017 US 201762549705 P
(43) Date of publication of application: 05.02.2020
(73) Proprietor: Google LLC, Mountain View, CA 94043 (US)
(72) Inventor: LYON, Richard Francis, Mountain View, CA 94043 (US); THORPE, Jeremy, Mountain View, CA 94043 (US); GETREUER, Pascal, Mountain View, CA 94043 (US)
(74) Representative: Maikowski & Ninnemann Patentanwälte Partnerschaft mbB
(86) International application number: PCT/US2018/037748
(87) International publication number: WO 2019/040161

(56) References cited:
- US-A1- 2003 212 549
- US-A1- 2007 254 604
- US-A1- 2012 214 416

## Description

### TECHNICAL FIELD

The technology disclosed herein is related to digital data communication between computing devices using sound energy. Particular examples relate to communicating digital data using binary phase shift keying (BPSK) modulated sound between computing devices.

### BACKGROUND

In mobile payments, instead of using methods like cash, check, and credit card, a customer can use a mobile phone to transfer money or to pay for goods and services. In most places outside the U.S., especially jurisdictions where a landline telecommunications infrastructure is not ubiquitous, more people have mobile phones than have bank accounts. For example, India has a vast non-banking population, many of whom reside in the rural areas and are cut off from access to basic financial services from a trusted source. As of 2012, India had nearly a billion mobile phone customers.

US 2012/0214416 A1 describes a method of communicating between at least two mobile devices in which the method comprises the steps of obtaining an invitation code and transforming the invitation code into a sound wave signal designed to be transmitted by a mobile device. After the invitation code is transferred into the sound wave signal, the sound wave signal is transmitted from a speaker of the mobile device. Additional mobile devices may receive the sound wave signal, resulting in a connection state between the devices.

### SUMMARY

The technology described herein includes computer implemented methods, computer program products, and systems to communicate digital data between computing devices using sound. In some examples, a first computing device packetizes data to be communicated. The first computing device then modulates a stream of the packetized data using binary phase shift keying (BPSK) modulation. The first computing device upsamples and filters to one signal in a frequency band in the response range of a speaker of the first computing device and in the response range of a microphone of a second computing device. The first computing device transmits the filtered signal as sound using the speaker of the first computing device.

In an example, a computer-implemented method to communicate digital data between computing devices using sound is provided, the method comprising: packetizing, by a first computing device, data to be communicated; modulating, by the first computing device, a stream of the packetized data using binary phase shift keying, BPSK, modulation; upsampling, by the first computing device, the modulated stream; filtering, by the first computing device, the upsampled stream to one signal in a frequency band in the response range of a speaker of the first computing device and in the response range of a microphone of a second computing device; and transmitting, by the first computing device, the filtered signal as sound using the speaker of the first computing device.

In an example, a computer program product is provided, comprising: a non-transitory computer-readable storage device having computer-executable program instructions embodied thereon that when executed by a computer cause the computer to wirelessly communicate data between devices, the computer-executable program instructions comprising: computer-executable program instructions to packetize, by a first computing device, data to be communicated; computer-executable program instructions to modulate, by the first computing device, a stream of the packetized data using binary phase shift keying, BPSK, modulation; computer-executable program instructions to upsample, by the first computing device, the modulated stream; computer-executable program instructions to filter, by the first computing device, the upsampled stream to one signal in a frequency band in the response range of a speaker of the first computing device and in the response range of a microphone of a second computing device; and computer-executable program instructions to transmit, by the first computing device, the filtered signal as sound using the speaker of the first computing device.

In an example, a system to communicate digital data between computing devices using sound is provided, the system comprising: a storage device; and a processor communicatively coupled to the storage device, wherein the processor executes application code instructions that are stored in the storage device to cause the system to: packetize, by a first computing device, data to be communicated; modulate, by the first computing device, a stream of the packetized data using binary phase shift keying, BPSK, modulation; upsample, by the first computing device, the modulated stream; filter, by the first computing device, the upsampled stream to one signal in a frequency band in the response range of a speaker of the first computing device and in the response range of a microphone of a second computing device; and transmit, by the first computing device, the filtered signal as sound using the speaker of the first computing device.

In some such examples, packetizing includes dividing the data into blocks, and, optionally, encoding each block, prepending a header on each encoded block, and appending a footer to each encoded block. In some such examples, encoding includes redundantly encoding each block using a low density parity check (LDPC) code. In some such examples, the header is a pseudorandom sequence, in particular a pseudorandom training sequence. The footer may be a bit-flipped version of the header.

In some such examples, a second computing device acquires the transmitted signal as modified by a transmission channel between the first computing device and the second computing device. The acquired signal is downsampled, demodulated into a stream of packets, and depacketized. In some such examples, acquiring includes the second computing device cross-correlating the received signal with an upsampled and bandpassed version of the pseudorandom sequence. The second computing device then locates a packet of the received signal by locating peaks of the cross-correlation corresponding to a header and a footer of the packet of the received signal. The second computing device estimates an impulse response of the transmission channel between the first computing device and the second computing device as a function of the correlation between the transmitted packet header and the received packet header. The second computing device then equalizes the received signal based on the estimated impulse response before downsampling, demodulating, and depacketizing to extract the data.

These and other aspects, objects, features, and advantages of the technology described herein will become apparent to those having ordinary skill in the art upon consideration of the following detailed description of illustrated examples.

### BRIEF DESCRIPTION OF THE DRAWINGS

FIG. 1 is a block diagram depicting an operating environment to communicate digital data between computing devices using sound, in accordance with certain examples.
FIG. 2 is a block diagram illustrating methods to communicate digital data between computing devices using sound, in accordance with certain examples.
FIG. 3 illustrates an example packet converted as a stream of symbols in a BPSK symbol space, in accordance with certain examples.
FIG. 4 illustrates a time domain representation of both a transmitted and a received BPSK-modulated waveform in the signal band, in accordance with certain examples.
FIG. 5 is a block diagram depicting a computing machine and a module, in accordance with certain examples.

### DETAILED DESCRIPTION OF THE EXAMPLES

While many potential mobile payments users in jurisdictions throughout the world have mobile phones, many of those mobile phones lack radio frequency (RF) communication features, other than via a cellular network that may not always be available. For example, typical mobile payments technologies employ peer-to-peer RF-based technologies such as Near Field Communication (NFC) technology, and Personal Area Network (PAN) technology such as BLUETOOTH™ communications technology, that are not available on all mobile phones.

By using and relying on the methods and systems described herein, the technology disclosed herein can provide digital data communication via sound directly between peer computing devices, such as a mobile phone and a point of sale (POS) terminal, or between two mobile phones. As such, the technology may be employed to extend mobile payments capability to devices that are not equipped with RF-based mobile payment technologies.

Turning now to the drawings, in which like numerals represent like (but not necessarily identical) elements throughout the figures, examples of the present technology are described in detail.

### Example System Architectures

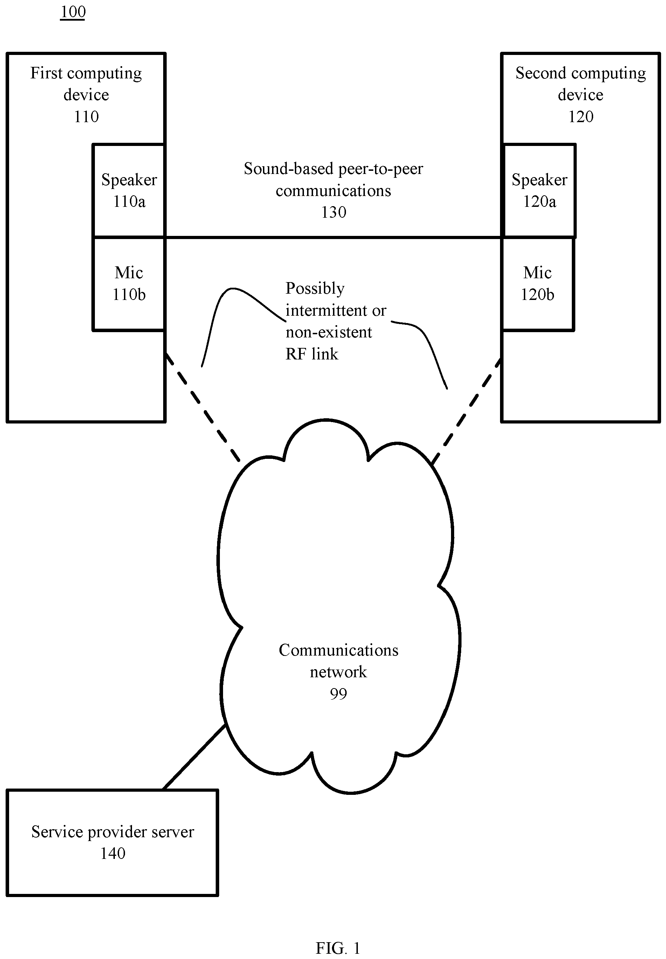

FIG. 1 is a block diagram depicting an operating environment 100 in accordance with certain examples of the technology disclosed herein. While each server, system, and device shown in the operating environment is represented by one instance of the server, system, or device, multiple instances of each can be used. Further, while certain aspects of operation of the present technology are presented in examples related to FIG. 1 to facilitate enablement of the claimed invention, additional features of the present technology, also facilitating enablement of the claimed invention, are disclosed elsewhere herein.

The operating environment 100 of Fig. 1 is a system to communicate digital data between computing devices using sound. As depicted in FIG. 1, the example operating environment 100 includes computing devices 110, 120, and 140. Each of devices 110, 120, and 140 may be configured to communicate with one another via communications network 99 - though such a link for either of devices 110 and 120 typically is a mediated RF link, and not typically a peer-to-peer a link. Further, such link may be intermittent when it exists. In some examples, a user associated with a device must install an application and/or make a feature selection to obtain the benefits of the technology described herein.

Network 99 includes one or more wired or wireless telecommunications means by which network devices may exchange data. For example, the network 99 may include one or more of a local area network (LAN), a wide area network (WAN), an intranet, an Internet, a storage area network (SAN), a personal area network (PAN), a metropolitan area network (MAN), a wireless local area network (WLAN), a virtual private network (VPN), a cellular or other mobile communication network, a BLUETOOTH® wireless technology connection, a near field communication (NFC) connection, any combination thereof, and any other appropriate architecture or system, that facilitates the RF communication of signals, data, and/or messages. Throughout the discussion of examples, it should be understood that the terms "data" and "information" are used interchangeably herein to refer to text, images, audio, video, or any other form of information that can exist in a computer-based environment.

Each computing device 110, 120, and 140 can include a communication module capable of transmitting and receiving data over the network 99. For example, each computing device can include a server, a desktop computer, a laptop computer, a tablet computer, a television with one or more processors embedded therein and/or coupled thereto, a smart phone, a handheld computer, a personal digital assistant (PDA), or any other wired or wireless processor-driven device.

In examples described herein, computing device 110 is a mobile phone lacking peer-to-peer RF communications subsystems, however, examples of the technology described herein provide utility regardless of the availability of other networked and peer-to-peer RF communications capability of the computing device 110.

In examples described herein computing device 120 is a POS device (including, in some examples, a mobile phone acting as a POS device) lacking peer-to-peer RF communications subsystems, however, examples of the technology described herein provide utility regardless of the availability of other networked and peer-to-peer RF communications capability of the computing device 120.

In examples described herein, communications link 130 is a sound-based peer-to-peer communications link; and computing device 110 and computing device 120 each includes a speaker output (110a and 120a respectively) and a microphone input (110b and 120b, respectively) used in communications link 130. "Sound" as used herein includes any vibration that typically propagates as a wave of pressure through air, and is not limited to sound frequencies audible by the human ear. Examples of the technology described herein operate over the frequency response ranges of speakers and microphones of computing devices 110 and 120.

The connections illustrated are examples, and other means of establishing a communications link between the computers and devices can be used. Moreover, those having ordinary skill in the art having the benefit of the present disclosure will appreciate that the computing devices illustrated in FIG. 1 may have any of several other suitable computer system configurations. For example, computing device 110 may be embodied as a mobile phone or handheld computer and may not include all the components described above.

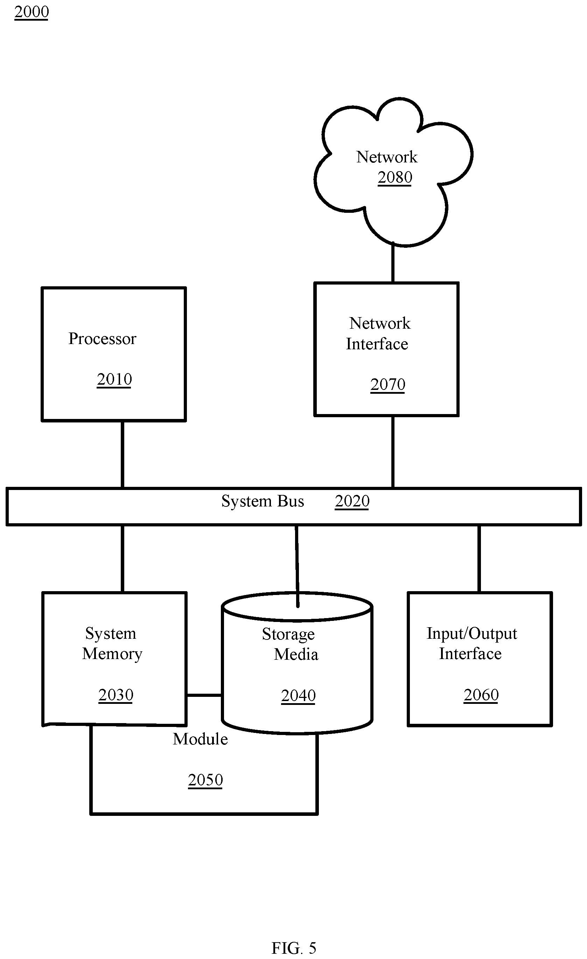

In examples, the computing devices 110, 120, 140, and any other computing machines associated with the technology presented herein, may be any type of computing machine such as, but not limited to, those discussed in more detail with respect to FIG. 5. Furthermore, any modules associated with any of these computing machines, such as modules described herein or any other modules (scripts, web content, software, firmware, or hardware) associated with the technology presented herein may be any of the modules discussed in more detail with respect to FIG. 5. The computing machines discussed herein may communicate with one another as well as other computer machines or communication systems over one or more networks, such as network 99. The network 99 may include any type of data or communications network, including any of the network technology discussed with respect to FIG. 5.

### Example Processes

The example methods illustrated in the figures are described hereinafter with respect to the components of the example operating environment 100 according to Fig. 1. The example methods also can be performed with other systems and in other environments. The operations described with respect to any of the figures can be implemented as executable code stored on a computer or machine readable non-transitory tangible storage medium (e.g., floppy disk, hard disk, ROM, EEPROM, nonvolatile RAM, CD-ROM, etc.) that are completed based on execution of the code by a processor circuit implemented using one or more integrated circuits; the operations described herein also can be implemented as executable logic that is encoded in one or more non-transitory tangible media for execution (e.g., programmable logic arrays or devices, field programmable gate arrays, programmable array logic, application specific integrated circuits, etc.).

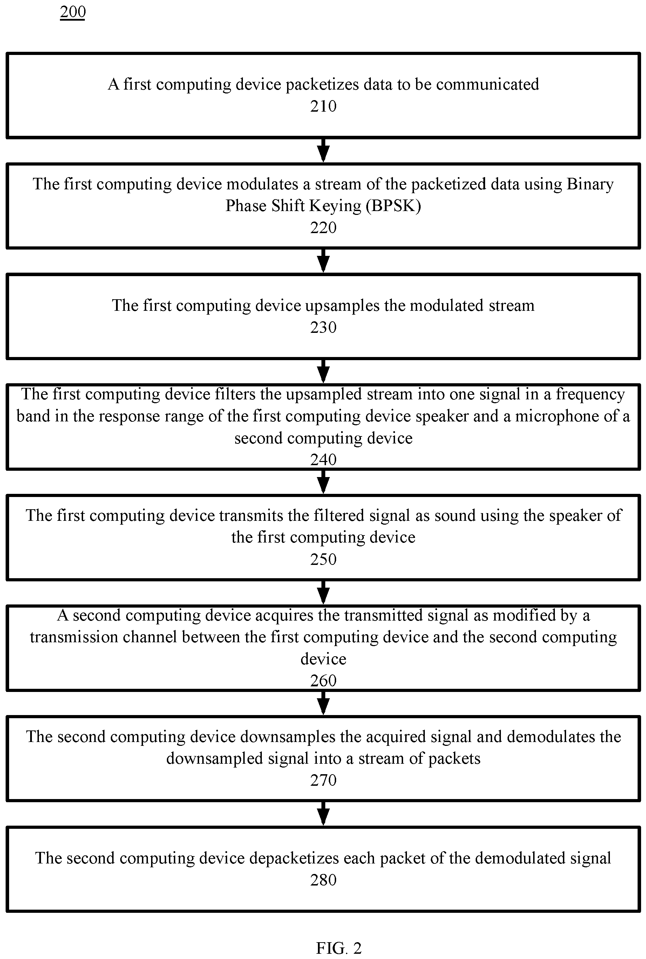

Referring to FIG. 2, and continuing to refer to FIG. 1 for context, methods 200 to communicate digital data between computing devices using sound are illustrated in accordance with certain examples. In such methods 200, a first computing device packetizes data to be communicated - **Block 210.** In some such methods 200, packetizing includes dividing the data to be communicated into blocks, encoding each block, prepending a header on each encoded block, and appending a footer to each encode block to form a packet.

As a continuing example, consider a digital message [1101111100010100 ...]. The first computing device 110 divides the message into four-bit blocks, for example, the first block being [1101]. In practice, actual messages can extend much longer than the small sample used in the continuing example, and blocks are often larger, for example 512 bits.

The first computing device applies an error correction code to each block. For example, the first computing device 110 can apply a rate ½ low-density parity-check (LDPC) to the block. In particular, an LDPC code designed using the protograph method can be applied by the first computing device 110. For example, a protograph can be generated using simulated annealing, with an energy function given by running approximate density evolution for a fixed number of iterations. In one example, the protograph has 32 variable nodes and 16 check nodes. Individual codes can be selected out of a batch of random expansions of the protograph by simulating the decoding performance under average white Gaussian noise (AWGN) conditions at the expected operating points. In the protograph (32, 16) example, the codes were tested in simulation with a proportion of incorrect bits, for example up to 10% incorrect bits, that are representative of what the receiver will experience. In such a case, the system will operate successfully and recover from up to 10% incorrect bits. Each chosen code can be specified by its parity matrix. Such an approach results in 1024 coded data bits.

In the continuing example, the first computing device applies a Hamming (7, 4) code for simplicity. Applying the Hamming (7, 4) code to the digital message results in a message with parity bits of [11101][100]. In the continuing example, the first computing device uses a 5-chip Barker code header - [11101]. Flipping the bits of the header, and assembling the packet results in the packet [11101][1101][100][00010]. In practice, a pseudorandom training sequence, for example 512 bits long, generated by a linear feedback shift register (LSFR) can be used by the first computing device 110 as the header. The header and footer are useful when acquiring the transmitted signal at the receiver 120, and for equalizing the received signal at the receiver 120 to mitigate distortion introduced by the channel 130.

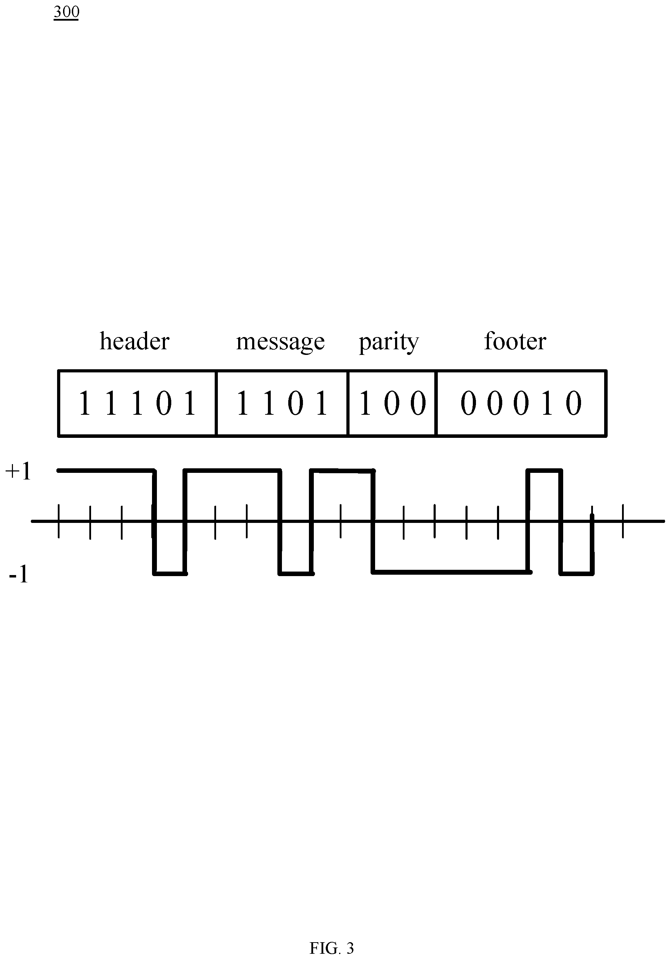

The first computing device modulates a stream of the packetized data using Binary Phase Shift Keying (BPSK) - **Block 220.** BPSK (also sometimes called phase reversal keying (PRK), or 2PSK) is the simplest form of phase shift keying (PSK). It uses two phases, which are separated by 180°. It does not particularly matter exactly where the constellation points are positioned, though typically they are represented on the real axis of a real/imaginary plane, at 0° and 180°. This modulation is the most robust of all the PSKs since it takes the highest level of noise or distortion to make the demodulator reach an incorrect decision. FIG. 3 shows the packet of the continuing example converted as a stream of symbols in the BPSK symbol space.

The first computing device 110 represents each 0/1-valued bit in the packet by one +1/-1-valued audio sample (BPSK symbol) to create a modulated stream of symbols. The first computing device then 110 upsamples the modulated stream - **Block 230.** By upsampling, the sampling rate of the modulated stream may be increased. In the continuing example, which is based on the first computing device 110 and the second computing device 120 sample audio like a typical mobile telephone, upsampling is based on a full sample rate of 44.1 kHz. The three parameters that determine the signal band are the full *sample rate, num bands* (an integer value), and *band* (also an integer value), where 0 ≤ *band* < *num_bands.*

The frequency of the lower edge of the signal band is (*sample_rate* x *band* / (2 x *num_bands*)), and the frequency of the upper edge of the signal band is (*sample_rate* x (*band* + 1) / (2 x *numbands*)). Restricting *band* and *num bands* to integers limits the possible choices for the signal band, but simplifies the demodulation. In the continuing example, choosing *numbands* = 4, *band* = 1 (the second possible band), and a full sample rate of 44.1 kHz results in a signal band of 5,512.5 Hz - 11,025 Hz. This band is above the frequencies of most of the energy of human speech and typical background noise, within the human hearing range, and within the frequency response of typical mobile phone microphones and speakers.

The first computing device filters the upsampled stream into one signal in a frequency band in the response range of a speaker of the first computing device and in the response range of a microphone of a second computing device - **Block 240.** In the continuing example, the first computing device 110 band pass filters the upsampled stream to suppress all but the signal image in the signal band 5,512.5 Hz - 11,025 Hz. The first computing device transmits the filtered signal as sound using the speaker of the first computing device - **Block 250.** In the continuing example, the first computing device 110 transmits the filtered signal as sound using the speaker 110a of the first computing device 110.

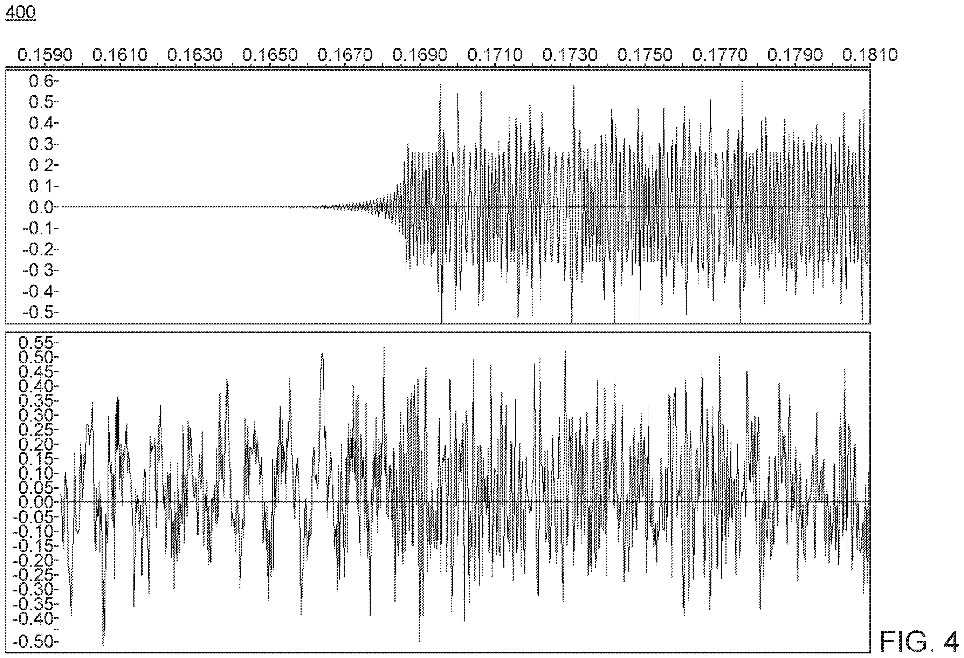

The second computing device acquires the transmitted signal as modified by a transmission channel between the first computing device and the second computing device - **Block 260.** FIG. 4 illustrates the beginning of an example encoded packet waveform as both transmitted from a speaker 110a of a first computing device 110 (top), and as received at the microphone 120b of a second computing device 120 as modified by the intervening transmission channel 130. The x-axis units of the waveforms are in seconds. The transmission channel may be sound propagation through the air, a modification of the transmitted signal may be caused by reflections and/or damping of the transmitted signal and/or by noise.

In acquisition, after the second computing device 120 receives the transmitted signal as modified by the transmission channel, the second computing device cross-correlates the received signal with a version of the pseudorandom sequence that has been modulated, upsampled, and band pass filtered in the manner of the signal transmitted from the first computing device 110. The second computing device 120 determines a packet location by locating a pair of correlation peaks with an expected spacing between them, corresponding to the header and footer. The spacing between the header and footer peaks allows measurement of the Doppler dilation, which is useful for motion tolerance. It is sufficient in this stage to locate the packets only approximately, within ±25ms.

The packet header's correlation response is a good estimate of the channel 130 impulse response. This estimation is useful, in part because the header sequence is pseudorandom, which means a transform of the header sequence has approximately constant magnitude and pseudorandom phase, so the correlation between the received packet header and the pseudorandom sequence cancels to leave only an estimate of the impulse response of the channel 130. To extract this channel impulse response, and discard unwanted correlation with the packet payload and footer, the second computing device 120 multiplies the correlation with a Hann window centered on the peak corresponding to the packet header.

The second computing device 120 then performs a Wiener deconvolution on the received signal using the estimates and windowed channel response to equalize the received signal. The deconvolution can be expressed by *X_eq*(*f*) = *X*(*f*)*H*(*f*)^{∗}/(|*H*(*f*)|^2 + *v*), where *X*(*f*) = the received signal as a function of frequency, *X_eq*(*f*) = the equalized signal as a function of frequency, *H*(*f*) = the transform of the channel impulse response, "*v*" is an offset, "*" is the complex conjugate operation, and "^" indicates an exponent. The offset *v* = 0.1 mean(|*H*(*f*)|^2), which avoids excessively large amplification where the channel response has a null or has been inaccurately estimated.

The second computing device 120 then downsamples the acquired signal and demodulates the downsampled signal into a stream of packets - **Block 270.** In the continuing example, downsampling and BPSK demodulating leave the assembled packet. The second computing device depacketizes each packet of the demodulated signal - **Block 280.** In the continuing example, the second computing device removes the header and footer from the packet, and then decodes the LDPC coded data portion of the packet to reveal the original message - [1101].

### Example Computer Program Products

A computer program product comprises a non-transitory computer-readable storage device having computer-executable program instructions embodied thereon that when executed by a computer cause the computer to wirelessly communicate data between devices, the computer-executable program instructions comprising computer-executable program instructions to execute an example method described hereinbefore.

### Other Examples

Figure 5 depicts a computing machine 2000 and a module 2050 in accordance with certain examples. The computing machine 2000 may correspond to any of the various computers, servers, mobile devices, embedded systems, computing devices, or computing systems presented herein. The module 2050 may comprise one or more hardware or software elements configured to facilitate the computing machine 2000 in performing the various methods and processing functions presented herein. The computing machine 2000 may include various internal or attached components such as a processor 2010, system bus 2020, system memory 2030, storage media 2040, input/output interface 2060, and a network interface 2070 for communicating with a network 2080.

The computing machine 2000 may be implemented as a conventional computer system, an embedded controller, a laptop, a server, a mobile device, a smartphone, a set-top box, a kiosk, a router or other network node, a vehicular information system, one or more processors associated with a television, a customized machine, any other hardware platform, or any combination or multiplicity thereof. The computing machine 2000 may be a distributed system configured to function using multiple computing machines interconnected via a data network or bus system.

The processor 2010 may be configured to execute code or instructions to perform the operations and functionality described herein, manage request flow and address mappings, and to perform calculations and generate commands. The processor 2010 may be configured to monitor and control the operation of the components in the computing machine 2000. The processor 2010 may be a general purpose processor, a processor core, a multiprocessor, a reconfigurable processor, a microcontroller, a digital signal processor ("DSP"), an application specific integrated circuit ("ASIC"), a graphics processing unit ("GPU"), a field programmable gate array ("FPGA"), a programmable logic device ("PLD"), a controller, a state machine, gated logic, discrete hardware components, any other processing unit, or any combination or multiplicity thereof. The processor 2010 may be a single processing unit, multiple processing units, a single processing core, multiple processing cores, special purpose processing cores, co-processors, or any combination thereof. According to certain examples, the processor 2010 along with other components of the computing machine 2000 may be a virtualized computing machine executing within one or more other computing machines.

The system memory 2030 may include non-volatile memories such as read-only memory ("ROM"), programmable read-only memory ("PROM"), erasable programmable read-only memory ("EPROM"), flash memory, or any other device capable of storing program instructions or data with or without applied power. The system memory 2030 may also include volatile memories such as random access memory ("RAM"), static random access memory ("SRAM"), dynamic random access memory ("DRAM"), and synchronous dynamic random access memory ("SDRAM"). Other types of RAM also may be used to implement the system memory 2030. The system memory 2030 may be implemented using a single memory module or multiple memory modules. While the system memory 2030 is depicted as being part of the computing machine 2000, one skilled in the art will recognize that the system memory 2030 may be separate from the computing machine 2000 without departing from the scope of the subject technology. It should also be appreciated that the system memory 2030 may include, or operate in conjunction with, a non-volatile storage device such as the storage media 2040.

The storage media 2040 may include a hard disk, a floppy disk, a compact disc read only memory ("CD-ROM"), a digital versatile disc ("DVD"), a Blu-ray disc, a magnetic tape, a flash memory, other non-volatile memory device, a solid state drive ("SSD"), any magnetic storage device, any optical storage device, any electrical storage device, any semiconductor storage device, any physical-based storage device, any other data storage device, or any combination or multiplicity thereof. The storage media 2040 may store one or more operating systems, application programs and program modules such as module 2050, data, or any other information. The storage media 2040 may be part of, or connected to, the computing machine 2000. The storage media 2040 may also be part of one or more other computing machines that are in communication with the computing machine 2000 such as servers, database servers, cloud storage, network attached storage, and so forth.

The module 2050 may comprise one or more hardware or software elements configured to facilitate the computing machine 2000 with performing the various methods and processing functions presented herein. The module 2050 may include one or more sequences of instructions stored as software or firmware in association with the system memory 2030, the storage media 2040, or both. The storage media 2040 may therefore represent examples of machine or computer readable media on which instructions or code may be stored for execution by the processor 2010. Machine or computer readable media may generally refer to any medium or media used to provide instructions to the processor 2010. Such machine or computer readable media associated with the module 2050 may comprise a computer software product. It should be appreciated that a computer software product comprising the module 2050 may also be associated with one or more processes or methods for delivering the module 2050 to the computing machine 2000 via the network 2080, any signal-bearing medium, or any other communication or delivery technology. The module 2050 may also comprise hardware circuits or information for configuring hardware circuits such as microcode or configuration information for an FPGA or other PLD.

The input/output ("I/O") interface 2060 may be configured to couple to one or more external devices, to receive data from the one or more external devices, and to send data to the one or more external devices. Such external devices along with the various internal devices may also be known as peripheral devices. The I/O interface 2060 may include both electrical and physical connections for operably coupling the various peripheral devices to the computing machine 2000 or the processor 2010. The I/O interface 2060 may be configured to communicate data, addresses, and control signals between the peripheral devices, the computing machine 2000, or the processor 2010. The I/O interface 2060 may be configured to implement any standard interface, such as small computer system interface ("SCSI"), serial-attached SCSI ("SAS"), fiber channel, peripheral component interconnect ("PCI"), PCI express (PCIe), serial bus, parallel bus, advanced technology attached ("ATA"), serial ATA ("SATA"), universal serial bus ("USB"), Thunderbolt, FireWire, various video buses, and the like. The I/O interface 2060 may be configured to implement only one interface or bus technology. Alternatively, the I/O interface 2060 may be configured to implement multiple interfaces or bus technologies. The I/O interface 2060 may be configured as part of, all of, or to operate in conjunction with, the system bus 2020. The I/O interface 2060 may include one or more buffers for buffering transmissions between one or more external devices, internal devices, the computing machine 2000, or the processor 2010.

The I/O interface 2060 may couple the computing machine 2000 to various input devices including mice, touch-screens, scanners, electronic digitizers, sensors, receivers, touchpads, trackballs, cameras, microphones, keyboards, any other pointing devices, or any combinations thereof. The I/O interface 2060 may couple the computing machine 2000 to various output devices including video displays, speakers, printers, projectors, tactile feedback devices, automation control, robotic components, actuators, motors, fans, solenoids, valves, pumps, transmitters, signal emitters, lights, and so forth.

The computing machine 2000 may operate in a networked environment using logical connections through the network interface 2070 to one or more other systems or computing machines across the network 2080. The network 2080 may include wide area networks (WAN), local area networks (LAN), intranets, the Internet, wireless access networks, wired networks, mobile networks, telephone networks, optical networks, or combinations thereof. For example, network 2080 may be the network 99 according to Fig. 1. The network 2080 may be packet switched, circuit switched, of any topology, and may use any communication protocol. Communication links within the network 2080 may involve various digital or an analog communication media such as fiber optic cables, free-space optics, waveguides, electrical conductors, wireless links, antennas, radio-frequency communications, and so forth.

The processor 2010 may be connected to the other elements of the computing machine 2000 or the various peripherals discussed herein through the system bus 2020. It should be appreciated that the system bus 2020 may be within the processor 2010, outside the processor 2010, or both. According to certain examples, any of the processor 2010, the other elements of the computing machine 2000, or the various peripherals discussed herein may be integrated into a single device such as a system on chip ("SOC"), system on package ("SOP"), or ASIC device.

The present technology may comprise a computer program that embodies the functions described and illustrated herein, wherein the computer program is implemented in a computer system that comprises instructions stored in a machine-readable medium and a processor that executes the instructions. However, it should be apparent that there could be many different ways of implementing the present technology in computer programming, and the examples should not be construed as limited to any one set of computer program instructions. Further, a skilled programmer would be able to write such a computer program to implement the present technology as described herein based on the appended flow charts and associated description in the application text. Therefore, disclosure of a particular set of program code instructions is not considered necessary for an adequate understanding of how to make and use the technology described herein. Further, those skilled in the art will appreciate that one or more aspects of the technology described herein may be performed by hardware, software, or a combination thereof, as may be embodied in one or more computing systems. Moreover, any reference to an act being performed by a computer should not be construed as being performed by a single computer as more than one computer may perform the act.

The technology described herein can be used with computer hardware and software that perform the methods and processing functions described herein. The systems, methods, and procedures described herein can be embodied in a programmable computer, computer-executable software, or digital circuitry. The software can be stored on computer-readable media. For example, computer-readable media can include a floppy disk, RAM, ROM, hard disk, removable media, flash memory, memory stick, optical media, magneto-optical media, CD-ROM, etc. Digital circuitry can include integrated circuits, gate arrays, building block logic, field programmable gate arrays (FPGA), etc.

The example systems, methods, and acts described in the examples presented previously are illustrative, and, in alternative examples, certain acts can be performed in a different order, in parallel with one another, omitted entirely, and/or combined between different examples, and/or certain additional acts can be performed, without departing from the scope and spirit of various examples. Accordingly, such alternative examples are included in the scope of the following claims, which are to be accorded the broadest interpretation to encompass such alternate examples.

Although specific examples have been described above in detail, the description is merely for purposes of illustration. It should be appreciated, therefore, that many aspects described above are not intended as required or essential elements unless explicitly stated otherwise. Modifications of, and equivalent components or acts corresponding to, the disclosed aspects of the examples, in addition to those described above, can be made by a person of ordinary skill in the art, having the benefit of the present disclosure, without departing from the scope of technology described herein defined in the following claims, the scope of which is to be accorded the broadest interpretation so as to encompass such modifications and equivalent structures.

## Claims

1. A computer-implemented method (200) to communicate digital data between computing devices (110, 120) using sound, comprising:
packetizing (210), by a first computing device (110), data to be communicated;
modulating (220), by the first computing device (110), a stream of the packetized data using binary phase shift keying (BPSK) modulation;
upsampling (230), by the first computing device (110), the modulated stream;
filtering (240), by the first computing device (110), the upsampled stream to one signal in a frequency band in the response range of a speaker (110a) of the first computing device (110) and in the response range of a microphone (120b) of a second computing device (120); and
transmitting (250), by the first computing device (110), the filtered signal as sound using the speaker (110a) of the first computing device (110).

2. The method of claim 1, wherein packetizing comprises:
dividing the data into blocks;
encoding each block;
prepending a header on each encoded block; and
appending a footer to each encoded block,
wherein, optionally, encoding comprises redundantly encoding each block using a low density parity check (LDPC) code.

3. The method of claim 2, wherein:
the header is a pseudorandom training sequence; and
the footer is a bit-flipped version of the header.

4. The method of any preceding claim, wherein BPSK modulation comprises forming a modulated stream of digital packets, with each packet bit represented by a BPSK symbol.

5. The method of any preceding claim, further comprising:
acquiring (260), by the second computing device (120), the transmitted signal as modified by a transmission channel (130) between the first computing device (110) and the second computing device (120);
downsampling (270), by the second computing device (120), the acquired signal;
demodulating, by the second computing device (120), the downsampled signal into a stream of packets; and
depacketizing (280), by the second computing device (120), each packet of the demodulated signal.

6. The method of claim 5 wherein:
packetizing, by the first computing device (110), comprises:
dividing the data into blocks,
encoding each block, and
adding a header and a footer to each encoded block,
wherein the header is a pseudorandom sequence and the footer is a bit-flipped version of the header; and
acquiring comprises:
receiving, by the second computing device (120), the transmitted signal as modified by the transmission channel (130) between the first computing device (110) and the second computing device (120);
cross-correlating, by the second computing device (120), the received signal with an upsampled and bandpassed version of the pseudorandom sequence;
locating, by the second computing device (120), a packet of the received signal by locating peaks of the cross-correlation corresponding to a header and a footer of the packet of the received signal;
estimating, by the second computing device (120), an impulse response of the transmission channel (130) between the first computing device (110) and the second computing device (120) as a function of the correlation between the transmitted packet header and the received packet header; and
equalizing, by the second computing device (120), the received signal based on the estimated impulse response.

7. A computer program product, comprising:
a non-transitory computer-readable storage device having computer-executable program instructions embodied thereon that when executed by a computer cause the computer to wirelessly communicate data between devices (110, 120), the computer-executable program instructions comprising:
computer-executable program instructions to packetize, by a first computing device (110), data to be communicated;
computer-executable program instructions to modulate, by the first computing device (110), a stream of the packetized data using binary phase shift keying (BPSK) modulation;
computer-executable program instructions to upsample, by the first computing device (110), the modulated stream;
computer-executable program instructions to filter, by the first computing device (110), the upsampled stream to one signal in a frequency band in the response range of a speaker (110a) of the first computing device (110) and in the response range of a microphone (120b) of a second computing device (120); and
computer-executable program instructions to transmit, by the first computing device (110), the filtered signal as sound using the speaker (110a) of the first computing device (110).

8. The computer program product of claim 7, wherein computer-executable program instructions to packetize comprise:
computer-executable program instructions to divide the data into blocks;
computer-executable program instructions to encode each block;
computer-executable program instructions to prepend a header on each encoded block; and
computer-executable program instructions to append a footer to each encoded block,
wherein, optionally, computer-executable program instructions to encode comprise computer-executable program instructions to redundantly encode each block using a low density parity check (LDPC) code.

9. The computer program product of claim 8, wherein the header is a pseudorandom training sequence and the footer is a bit-flipped version of the header.

10. The computer program product of any of claims 7 to 9, wherein BPSK modulation comprises forming a modulated stream of digital packets, with each packet bit represented by a BPSK symbol.

11. The computer program product of any of claims 7 to 10, further comprising computer-executable program instructions to:
acquire, by the second computing device (120), the transmitted signal as modified by a transmission channel (130) between the first computing device (110) and the second computing device (120);
downsample, by the second computing device (120), the acquired signal;
demodulating, by the second computing device (120), the downsampled signal into a stream of packets; and
depacketize, by the second computing device (120), each packet of the demodulated signal,
wherein, optionally:
packetizing, by the first computing device (110), comprises:
dividing the data into equal blocks,
encoding each block, and
adding a header and a footer to each encoded block,
wherein the header is a pseudorandom sequence and the footer is a bit-flipped version of the header; and
acquiring comprises:
receiving, by the second computing device (120), the transmitted signal as modified by the transmission channel between the first computing device (110) and the second computing device (120);
cross-correlating, by the second computing device (120), the received signal with an upsampled and bandpassed version of the pseudorandom sequence;
locating, by the second computing device (120), a packet of the received signal by locating peaks of the cross-correlation corresponding to a header and a footer of the packet of the received signal;
estimating, by the second computing device (120), an impulse response of the transmission channel (130) between the first computing device (110) and the second computing device (120) as a function of the correlation between the transmitted packet header and the received packet header; and
equalizing, by the second computing device (120), the received signal based on the estimated impulse response.

12. A system to communicate digital data between computing devices (110, 120) using sound, the system comprising:
a storage device; and
a processor communicatively coupled to the storage device, wherein the processor executes application code instructions that are stored in the storage device to cause the system to:
packetize, by a first computing device (110), data to be communicated;
modulate, by the first computing device (110), a stream of the packetized data using binary phase shift keying (BPSK) modulation;
upsample, by the first computing device (110), the modulated stream;
filter, by the first computing device (110), the upsampled stream to one signal in a frequency band in the response range of a speaker (110a) of the first computing device (110) and in the response range of a microphone (120b) of a second computing device (120); and
transmit, by the first computing device (110), the filtered signal as sound using the speaker (110a) of the first computing device (110).

13. The system of claim 12, wherein packetizing comprises:
dividing the data into blocks;
encoding each block;
prepending a header on each encoded block; and
appending a footer to each encoded block,
wherein, optionally, encoding comprises redundantly encoding each block using a low density parity check (LDPC) code.

14. The method of claim 13, wherein:
the header is a pseudorandom training sequence; and
the footer is a bit-flipped version of the header.

15. The system of any of claims 12 to 14, wherein the processor further executes application code instructions that are stored in the storage device to cause the system to:
acquire, by the second computing device (120), the transmitted signal as modified by a transmission channel (130) between the first computing device (110) and the second computing device (120);
downsample, by the second computing device (120), the acquired signal;
demodulate, by the second computing device (120), the downsampled signal into a stream of packets; and
depacketize, by the second computing device (120), each packet of the demodulated signal,
wherein, optionally:
packetizing, by the first computing device (110), comprises:
dividing the data into blocks,
encoding each block, and
adding a header and a footer to each encoded block,
wherein the header is a pseudorandom sequence and the footer is a bit-flipped version of the header; and
acquiring comprises:
receiving, by the second computing device (120), the transmitted signal as modified by the transmission channel (130) between the first computing device (110) and the second computing device (120);
cross-correlating, by the second computing device (120), the received signal with an upsampled and bandpassed version of the pseudorandom sequence;
locating, by the second computing device (120), a packet of the received signal by locating peaks of the cross-correlation corresponding to a header and a footer of the packet of the received signal;
estimating, by the second computing device (120), an impulse response of the transmission channel (130) between the first computing device (110) and the second computing device (120) as a function of the correlation between the transmitted packet header and the received packet header; and
equalizing, by the second computing device (120), the received signal based on the estimated impulse response.

## Patentansprüche

1. Computerimplementiertes Verfahren (200) zum Übermitteln von digitalen Daten zwischen Computergeräten (110, 120) unter Nutzung von Ton, umfassend:
Paketieren (210), durch ein erstes Computergerät (110), von zu übermittelnden Daten;
Modulieren (220), durch das erste Computergerät (110), eines Datenstroms der paketierten Daten unter Nutzung einer binären Phasenumtastungsmodulation (BPSK-Modulation);
Hochsampeln (230), durch das erste Computergerät (110), des modulierten Datenstroms;
Filtern (240), durch das erste Computergerät (110), des hochgesampelten Datenstroms auf ein Signal in einem Frequenzband im Ansprechbereich eines Lautsprechers (110a) des ersten Computergeräts (110) und im Ansprechbereich eines Mikrofons (120b) eines zweiten Computergeräts (120); und
Übertragen (250), durch das erste Computergerät (110), des gefilterten Signals als Ton unter Nutzung des Lautsprechers (110a) des ersten Computergeräts (110).

2. Verfahren nach Anspruch 1, wobei das Paketieren Folgendes umfasst:
Aufteilen der Daten in Blöcke;
Codieren jedes Blocks;
Voranstellen eines Headers vor jeden codierten Block; und
Anhängen eines Footers an jeden codierten Block, wobei, optional, das Codieren ein redundantes Codieren jedes Blocks unter Nutzung eines Paritätsprüfcodes mit niedriger Dichte (LDPC-Code) umfasst.

3. Verfahren nach Anspruch 2, wobei:
der Header eine Pseudozufallstrainingssequenz ist; und
der Footer eine Version des Headers mit umgekehrten Bits ist.

4. Verfahren nach einem der vorhergehenden Ansprüche, wobei die BPSK-Modulation ein Bilden eines modulierten Datenstroms von digitalen Paketen umfasst, wobei jedes Paket-Bit durch ein BPSK-Symbol repräsentiert wird.

5. Verfahren nach einem der vorhergehenden Ansprüche, ferner umfassend:
Erfassen (260), durch das zweite Computergerät (120), des übertragenen Signals, modifiziert durch einen Übertragungskanal (130) zwischen dem ersten Computergerät (110) und dem zweiten Computergerät (120);
Heruntersampeln (270), durch das zweite Computergerät (120), des erfassten Signals;
Demodulieren, durch das zweite Computergerät (120), des heruntergesampelten Signals zu einem Paketdatenstrom; und
Depaketieren (280), durch das zweite Computergerät (120), jedes Pakets des demodulierten Signals.

6. Verfahren nach Anspruch 5, wobei:
das Paketieren, durch das erste Computergerät (110), Folgendes umfasst:
Aufteilen der Daten in Blöcke,
Codieren jedes Blocks, und
Hinzufügen eines Headers und eines Footers zu jedem codierten Block,
wobei der Header eine Pseudozufallssequenz ist und der Footer eine Version des Headers mit umgekehrten Bits ist; und
das Erfassen Folgendes umfasst:
Empfangen, durch das zweite Computergerät (120), des übertragenen Signals, modifiziert durch den Übertragungskanal (130) zwischen dem ersten Computergerät (110) und dem zweiten Computergerät (120);
Kreuzkorrelieren, durch das zweite Computergerät (120), des empfangenen Signals mit einer hochgesampelten und bandpassgefilterten Version der Pseudozufallssequenz;
Lokalisieren, durch das zweite Computergerät (120), eines Pakets des empfangenen Signals durch Lokalisieren von Spitzen der Kreuzkorrelation, die einem Header und einem Footer des Pakets des empfangenen Signals entsprechen;
Schätzen, durch das zweite Computergerät (120), einer Impulsantwort des Übertragungskanals (130) zwischen dem ersten Computergerät (110) und dem zweiten Computergerät (120) in Abhängigkeit von der Korrelation zwischen dem übertragenen Paket-Header und dem empfangenen Paket-Header; und
Entzerren, durch das zweite Computergerät (120), des empfangenen Signals basierend auf der geschätzten Impulsantwort.

7. Computerprogrammprodukt, aufweisend:
ein nichtflüchtiges computerlesbares Speichergerät mit darauf aufgebrachten computerausführbaren Programmanweisungen, die, bei Ausführung durch einen Computer, den Computer dazu veranlassen, Daten zwischen Geräten (110, 120) drahtlos zu übermitteln, wobei die computerausführbaren Programmanweisungen Folgendes umfassen:
computerausführbare Programmanweisungen zum Paketieren, durch ein erstes Computergerät (110), von zu übermittelnden Daten;
computerausführbare Programmanweisungen zum Modulieren, durch das erste Computergerät (110), eines Datenstroms der paketierten Daten unter Nutzung einer binären Phasenumtastungsmodulation (BPSK-Modulation);
computerausführbare Programmanweisungen zum Hochsampeln, durch das erste Computergerät (110), des modulierten Datenstroms;
computerausführbare Programmanweisungen zum Filtern, durch das erste Computergerät (110), des hochgesampelten Datenstroms auf ein Signal in einem Frequenzband im Ansprechbereich eines Lautsprechers (110a) des ersten Computergeräts (110) und im Ansprechbereich eines Mikrofons (120b) eines zweiten Computergeräts (120); und
computerausführbare Programmanweisungen zum Übertragen, durch das erste Computergerät (110), des gefilterten Signals als Ton unter Nutzung des Lautsprechers (110a) des ersten Computergeräts (110).

8. Computerprogrammprodukt nach Anspruch 7, wobei die computerausführbaren Anweisungen zum Paketieren ferner Folgendes umfassen:
computerausführbare Programmanweisungen zum Aufteilen der Daten in Blöcke;
computerausführbare Programmanweisungen zum Codieren jedes Blocks;
computerausführbare Programmanweisungen zum Voranstellen eines Headers vor jeden codierten Block; und
computerausführbare Programmanweisungen zum Anhängen eines Footers an jeden codierten Block,
wobei, optional, die computerausführbaren Programmanweisungen zum Codieren computerausführbare Programmanweisungen zum redundanten Codieren jedes Blocks unter Nutzung eines Paritätsprüfcodes mit niedriger Dichte (LDPC-Code) umfassen.

9. Computerprogrammprodukt nach Anspruch 8, wobei der Header eine Pseudozufallstrainingssequenz ist und der Footer eine Version des Headers mit umgekehrten Bits ist.

10. Computerprogrammprodukt nach einem der Ansprüche 7 bis 9, wobei die BPSK-Modulation ein Bilden eines modulierten Datenstroms von digitalen Paketen umfasst, wobei jedes Paket-Bit durch ein BPSK-Symbol repräsentiert wird.

11. Computerprogrammprodukt nach einem der Ansprüche 7 bis 10, ferner aufweisend computerausführbare Programmanweisungen zum:
Erfassen, durch das zweite Computergerät (120), des übertragenen Signals, modifiziert durch einen Übertragungskanal (130) zwischen dem ersten Computergerät (110) und dem zweiten Computergerät (120);
Heruntersampeln, durch das zweite Computergerät (120), des erfassten Signals;
Demodulieren, durch das zweite Computergerät (120), des heruntergesampelten Signals zu einem Paketdatenstrom; und
Depaketieren, durch das zweite Computergerät (120), jedes Pakets des demodulierten Signals,
wobei, optional:
das Paketieren, durch das erste Computergerät (110), Folgendes umfasst:
Aufteilen der Daten in gleiche Blöcke,
Codieren jedes Blocks, und
Hinzufügen eines Headers und eines Footers zu jedem codierten Block,
wobei der Header eine Pseudozufallssequenz ist und der Footer eine Version des Headers mit umgekehrten Bits ist; und
das Erfassen Folgendes umfasst:
Empfangen, durch das zweite Computergerät (120), des übertragenen Signals, modifiziert durch den Übertragungskanal zwischen dem ersten Computergerät (110) und dem zweiten Computergerät (120);
Kreuzkorrelieren, durch das zweite Computergerät (120), des empfangenen Signals mit einer hochgesampelten und bandpassgefilterten Version der Pseudozufallssequenz;
Lokalisieren, durch das zweite Computergerät (120), eines Pakets des empfangenen Signals durch Lokalisieren von Spitzen der Kreuzkorrelation, die einem Header und einem Footer des Pakets des empfangenen Signals entsprechen;
Schätzen, durch das zweite Computergerät (120), einer Impulsantwort des Übertragungskanals (130) zwischen dem ersten Computergerät (110) und dem zweiten Computergerät (120) in Abhängigkeit von der Korrelation zwischen dem übertragenen Paket-Header und dem empfangenen Paket-Header; und
Entzerren, durch das zweite Computergerät (120), des empfangenen Signals basierend auf der geschätzten Impulsantwort.

12. System zum Übermitteln von digitalen Daten zwischen Computergeräten (110, 120) unter Nutzung von Ton, das System umfassend:
ein Speichergerät; und
einen mit dem Speichergerät kommunikativ gekoppelten Prozessor, wobei der Prozessor Anwendungscodeanweisungen ausführt, die in dem Speichergerät gespeichert sind, um das System zu veranlassen zum:
Paketieren, durch ein erstes Computergerät (110), von zu übermittelnden Daten;
Modulieren, durch das erste Computergerät (110), eines Datenstroms der paketierten Daten unter Nutzung einer binären Phasenumtastungsmodulation (BPSK-Modulation);
Hochsampeln, durch das erste Computergerät (110), des modulierten Datenstroms;
Filtern, durch das erste Computergerät (110), des hochgesampelten Datenstroms auf ein Signal in einem Frequenzband im Ansprechbereich eines Lautsprechers (110a) des ersten Computergeräts (110) und im Ansprechbereich eines Mikrofons (120b) eines zweiten Computergeräts (120); und
Übertragen, durch das erste Computergerät (110), des gefilterten Signals als Ton unter Nutzung des Lautsprechers (110a) des ersten Computergeräts (110).

13. System nach Anspruch 12, wobei das Paketieren Folgendes umfasst:
Aufteilen der Daten in Blöcke;
Codieren jedes Blocks;
Voranstellen eines Headers an jeden codierten Block;
und Anhängen eines Footers an jeden codierten Block, wobei, optional, das Codieren ein redundantes Codieren jedes Blocks unter Nutzung eines Paritätsprüfcodes mit niedriger Dichte (LDPC-Code) umfasst.

14. Verfahren nach Anspruch 13, wobei:
der Header eine Pseudozufallstrainingssequenz ist; und
der Footer eine Version des Headers mit umgekehrten Bits ist.

15. System nach einem der Ansprüche 12 bis 14, wobei der Prozessor ferner Anwendungscodeanweisungen, die in dem Speichergerät gespeichert sind, ausführt, um das System zu veranlassen zum:
Erfassen, durch das zweite Computergerät (120), des übertragenen Signals, modifiziert durch einen Übertragungskanal (130) zwischen dem ersten Computergerät (110) und dem zweiten Computergerät (120);
Heruntersampeln, durch das zweite Computergerät (120), des erfassten Signals;
Demodulieren, durch das zweite Computergerät (120), des heruntergesampelten Signals zu einem Paketdatenstrom; und
Depaketieren, durch das zweite Computergerät (120), jedes Pakets des demodulierten Signals,
wobei, optional:
das Paketieren, durch das erste Computergerät (110), Folgendes umfasst:
Aufteilen der Daten in Blöcke,
Codieren jedes Blocks, und
Hinzufügen eines Headers und eines Footers zu jedem codierten Block,
wobei der Header eine Pseudozufallssequenz ist und der Footer eine Version des Headers mit umgekehrten Bits ist; und
das Erfassen Folgendes umfasst:
Empfangen, durch das zweite Computergerät (120), des übertragenen Signals, modifiziert durch den Übertragungskanal (130) zwischen dem ersten Computergerät (110) und dem zweiten Computergerät (120);
Kreuzkorrelieren, durch das zweite Computergerät (120), des empfangenen Signals mit einer hochgesampelten und bandpassgefilterten Version der Pseudozufallssequenz;
Lokalisieren, durch das zweite Computergerät (120), eines Pakets des empfangenen Signals durch Lokalisieren von Spitzen der Kreuzkorrelation, die einem Header und einem Footer des Pakets des empfangenen Signals entsprechen;
Schätzen, durch das zweite Computergerät (120), einer Impulsantwort des Übertragungskanals (130) zwischen dem ersten Computergerät (110) und dem zweiten Computergerät (120) in Abhängigkeit von der Korrelation zwischen dem übertragenen Paket-Header und dem empfangenen Paket-Header; und
Entzerren, durch das zweite Computergerät (120), des empfangenen Signals basierend auf der geschätzten Impulsantwort.

## Revendications

1. Procédé mis en œuvre par ordinateur (200) pour communiquer des données numériques entre des dispositifs informatiques (110, 120) à l'aide de son, comprenant:
la mise en paquets (210), par un premier dispositif informatique (110), de données à communiquer;
la modulation (220), par le premier dispositif informatique (110), d'un flux des données mises en paquet à l'aide d'une modulation par déplacement binaire de phase (BPSK);
le suréchantillonnage (230), par le premier dispositif informatique (110), du flux modulé;
le filtrage (240), par le premier dispositif informatique (110), du flux suréchantillonné en un signal dans une bande de fréquence dans la plage de réponse d'un haut-parleur (110a) du premier dispositif informatique (110) et dans la plage de réponse d'un microphone (120b) d'un deuxième dispositif informatique (120); et
la transmission (250), par le premier dispositif informatique (110), du signal filtré en tant que son à l'aide du haut-parleur (110a) du premier dispositif informatique (110).

2. Procédé selon la revendication 1, dans lequel la mise en paquets comprend:
la division des données en blocs;
le codage de chaque bloc;
l'ajout initial d'un en-tête sur chaque bloc codé; et
l'annexion d'un pied de page à chaque bloc codé,
dans lequel, facultativement, le codage comprend un codage redondant de chaque bloc à l'aide d'un code de contrôle de parité à faible densité (LDPC).

3. Procédé selon la revendication 2, dans lequel:
l'en-tête est une séquence d'entraînement pseudo-aléatoire; et
le pied de page est une version à bits modifiés de l'en-tête.

4. Procédé selon l'une quelconque des revendications précédentes, dans lequel la modulation BPSK comprend la formation d'un flux modulé de paquets numériques, avec chaque bit de paquet représenté par un symbole BPSK.

5. Procédé selon l'une quelconque des revendications précédentes comprenant en outre:
l'acquisition (260), par le deuxième dispositif informatique (120), du signal transmis tel que modifié par un canal de transmission (130) entre le premier dispositif informatique (110) et le deuxième dispositif informatique (120);
le sous-échantillonnage (270), par le deuxième dispositif informatique (120), du signal acquis;
la démodulation, par le deuxième dispositif informatique (120), du signal sous-échantillonné en un flux de paquets; et
l'annulation de la mise en paquets (280), par le deuxième dispositif informatique (120), de chaque paquet du signal démodulé.

6. Procédé selon la revendication 5, dans lequel:
la mise en paquets, par le premier dispositif informatique (110), comprend:
la division des données en blocs,
le codage de chaque bloc, et
l'ajout d'un en-tête et d'un pied de page à chaque bloc codé,
dans lequel l'en-tête est une séquence pseudo-aléatoire et le pied de page est une version à bits modifiés de l'en-tête; et
l'acquisition comprend:
la réception, par le deuxième dispositif informatique (120), du signal transmis tel que modifié par le canal de transmission (130) entre le premier dispositif informatique (110) et le deuxième dispositif informatique (120);
la corrélation croisée, par le deuxième dispositif informatique (120), du signal reçu avec une version suréchantillonnée et à bande passante de la séquence pseudo-aléatoire;
la localisation, par le deuxième dispositif informatique (120), d'un paquet du signal reçu en localisant des pics de la corrélation croisée correspondant à un en-tête et à un pied de page du paquet du signal reçu;
l'estimation, par le deuxième dispositif informatique (120), d'une réponse impulsion du canal de transmission (130) entre le premier dispositif informatique (110) et le deuxième dispositif informatique (120) en tant que fonction de la corrélation entre l'en-tête de paquet transmis et l'en-tête de paquet reçu; et
l'égalisation, par le deuxième dispositif informatique (120), du signal reçu sur la base de la réponse d'impulsion estimée.

7. Produit de programme informatique, comprenant:
un dispositif de stockage lisible par ordinateur non transitoire comportant des instructions de programme exécutables par ordinateur y étant incorporées, qui, lorsqu'elles sont exécutées par un ordinateur, amènent l'ordinateur à communiquer sans fil des données entre des dispositifs (110, 120), les instructions de programme exécutables par ordinateur comprenant:
des instructions de programme exécutables par ordinateur pour la mise en paquets, par un premier dispositif informatique (110), de données à communiquer;
des instructions de programme exécutables par ordinateur pour moduler, par le premier dispositif informatique (110), un flux des données mises en paquet à l'aide d'une modulation par déplacement binaire de phase (BPSK);
des instructions de programme exécutables par ordinateur pour suréchantillonner, par le premier dispositif informatique (110), le flux modulé;
des instructions de programme exécutables par ordinateur pour filtrer, par le premier dispositif informatique (110), du flux suréchantillonné en un signal dans une bande de fréquence dans la plage de réponse d'un haut-parleur (110a) du premier dispositif informatique (110) et dans la plage de réponse d'un microphone (120b) d'un deuxième dispositif informatique (120); et
des instructions de programme exécutables par ordinateur pour transmettre, par le premier dispositif informatique (110), du signal filtré en tant que son à l'aide du haut-parleur (110a) du premier dispositif informatique (110).

8. Produit de programme informatique selon la revendication 7, dans lequel des instructions de programme exécutables par ordinateur pour la mise en paquets comprennent:
des instructions de programme exécutables par ordinateur pour diviser les données en blocs;
des instructions de programme exécutables par ordinateur pour coder chaque bloc;
des instructions de programme exécutables par ordinateur pour ajouter initialement un en-tête sur chaque bloc codé; et
des instructions de programme exécutables par ordinateur pour annexer un pied de page à chaque bloc codé,
dans lequel, facultativement, des instructions de programme exécutables par ordinateur pour le codage comprennent des instructions de programme exécutables par ordinateur pour coder de façon redondante chaque bloc à l'aide d'un code de contrôle de parité à faible densité (LDPC).

9. Produit de programme informatique selon la revendication 8, dans lequel l'en-tête est une séquence d'entraînement pseudo-aléatoire et le pied de page est une version à bits modifiés de l'en-tête.

10. Produit de programme informatique selon l'une quelconque des revendications 7 à 9, dans lequel la modulation BPSK comprend la formation d'un flux modulé de paquets numériques, avec chaque bit de paquet représenté par un symbole BPSK.

11. Produit de programme informatique selon l'une quelconque des revendications 7 à 10, comprenant en outre des instructions de programme exécutables par ordinateur pour:
acquérir, par le deuxième dispositif informatique (120), le signal transmis tel que modifié par un canal de transmission (130) entre le premier dispositif informatique (110) et le deuxième dispositif informatique (120);
sous-échantillonner, par le deuxième dispositif informatique (120), le signal acquis;
démoduler, par le deuxième dispositif informatique (120), le signal sous-échantillonné en un flux de paquets; et
annuler la mise en paquets, par le deuxième dispositif informatique (120), de chaque paquet du signal démodulé,
dans lequel, facultativement:
la mise en paquets, par le premier dispositif informatique (110), comprend:
la division des données en blocs égaux,
le codage de chaque bloc, et
l'ajout d'un en-tête et d'un pied de page à chaque bloc codé,
dans lequel l'en-tête est une séquence pseudo-aléatoire et le pied de page est une version à bits modifiés de l'en-tête; et
l'acquisition comprend:
la réception, par le deuxième dispositif informatique (120), du signal transmis tel que modifié par le canal de transmission entre le premier dispositif informatique (110) et le deuxième dispositif informatique (120);
la corrélation croisée, par le deuxième dispositif informatique (120), du signal reçu avec une version suréchantillonnée et à bande passante de la séquence pseudo-aléatoire;
la localisation, par le deuxième dispositif informatique (120), d'un paquet du signal reçu en localisant des pics de la corrélation croisée correspondant à un en-tête et à un pied de page du paquet du signal reçu;
l'estimation, par le deuxième dispositif informatique (120), d'une réponse impulsion du canal de transmission (130) entre le premier dispositif informatique (110) et le deuxième dispositif informatique (120) en tant que fonction de la corrélation entre l'en-tête de paquet transmis et l'en-tête de paquet reçu; et
l'égalisation, par le deuxième dispositif informatique (120), du signal reçu sur la base de la réponse d'impulsion estimée.

12. Système pour communiquer des données numériques entre des dispositifs informatiques (110, 120) à l'aide de son, le système comprenant:
un dispositif de stockage; et
un processeur couplé de manière communicative au dispositif de stockage, dans lequel le processeur exécute des instructions de code d'application qui sont stockées dans le dispositif de stockage pour amener le système à:
mettre en paquets, par un premier dispositif informatique (110), de données à communiquer;
moduler, par le premier dispositif informatique (110), un flux des données mises en paquet à l'aide d'une modulation par déplacement binaire de phase (BPSK);
suréchantillonner, par le premier dispositif informatique (110), du flux modulé;
filtrer, par le premier dispositif informatique (110), du flux suréchantillonné en un signal dans une bande de fréquence dans la plage de réponse d'un haut-parleur (110a) du premier dispositif informatique (110) et dans la plage de réponse d'un microphone (120b) d'un deuxième dispositif informatique (120); et
transmettre, par le premier dispositif informatique (110), du signal filtré en tant que son à l'aide du haut-parleur (110a) du premier dispositif informatique (110).

13. Système selon la revendication 12, dans lequel la mise en paquets comprend:
la division des données en blocs;
le codage de chaque bloc;
l'ajout initial d'un en-tête sur chaque bloc codé;
et l'annexion d'un pied de page à chaque bloc codé,
dans lequel, facultativement, le codage comprend un codage redondant de chaque bloc à l'aide d'un code de contrôle de parité à faible densité (LDPC).

14. Procédé selon la revendication 13, dans lequel:
l'en-tête est une séquence d'entraînement pseudo-aléatoire; et
le pied de page est une version à bits modifiés de l'en-tête.

15. Système selon l'une quelconque des revendications 12 à 14, dans lequel le processeur exécute en outre des instructions de code d'application qui sont stockées dans le dispositif de stockage pour amener le système à:
acquérir, par le deuxième dispositif informatique (120), le signal transmis tel que modifié par un canal de transmission (130) entre le premier dispositif informatique (110) et le deuxième dispositif informatique (120);
sous-échantillonner, par le deuxième dispositif informatique (120), le signal acquis;
démoduler, par le deuxième dispositif informatique (120), le signal sous-échantillonné en un flux de paquets; et
annuler la mise en paquets, par le deuxième dispositif informatique (120), de chaque paquet du signal démodulé,
dans lequel, facultativement:
la mise en paquets, par le premier dispositif informatique (110), comprend:
la division des données en blocs,
le codage de chaque bloc, et
l'ajout d'un en-tête et d'un pied de page à chaque bloc codé,
dans lequel l'en-tête est une séquence pseudo-aléatoire et le pied de page est une version à bits modifiés de l'en-tête; et
l'acquisition comprend:
la réception, par le deuxième dispositif informatique (120), du signal transmis tel que modifié par le canal de transmission (130) entre le premier dispositif informatique (110) et le deuxième dispositif informatique (120);
la corrélation croisée, par le deuxième dispositif informatique (120), du signal reçu avec une version suréchantillonnée et à bande passante de la séquence pseudo-aléatoire;
la localisation, par le deuxième dispositif informatique (120), d'un paquet du signal reçu en localisant des pics de la corrélation croisée correspondant à un en-tête et à un pied de page du paquet du signal reçu;
l'estimation, par le deuxième dispositif informatique (120), d'une réponse impulsion du canal de transmission (130) entre le premier dispositif informatique (110) et le deuxième dispositif informatique (120) en tant que fonction de la corrélation entre l'en-tête de paquet transmis et l'en-tête de paquet reçu; et
l'égalisation, par le deuxième dispositif informatique (120), du signal reçu sur la base de la réponse d'impulsion estimée.
